# DEMANDE DE BREVET EUROPEEN

(11) **EP 1 498 061 A1**
(43) Date de publication de la demande: **19.01.2005**
(21) Numéro de dépôt: 04356121.6
(22) Date de dépôt: 02.07.2004
(51) Int. Cl.: A47J 37/08

(54) **Appareil électroménager électrique équipé d'un moteur électrique, et procédé de commande d'un tel moteur**

(30) Priorité: 15.07.2003 FR 0308611
(71) Demandeur: SEB S.A., 69130 Ecully (FR)
(72) Inventeur: Battu, Claude, 88120 Le Syndicat (FR); Herrada, José, 38200 Vienne (FR); Scannella, Julien, 88000 Epinal (FR)
(74) Mandataire: Kiehl, Hubert

(57) **Abrégé**

Appareil électroménager électrique, tel que grille-pain ou friteuse notamment, comportant un châssis et un chariot mobile, ledit chariot étant apte à se déplacer selon un mouvement alternatif par rapport au châssis grâce à un mécanisme incluant un moteur électrique (25) alimenté par une source de tension alternative (16), caractérisé en ce qu'il comporte :
- des moyens (28) pour connecter électriquement le moteur (25) à la source de tension (16) pendant tout ou partie des demi-alternances d'un signe donné de la tension alternative,
- des moyens de commande (20) desdits moyens de connexion, prenant en compte une estimation de la vitesse du moteur élaborée à partir de la tension (Um) mesurée aux bornes du moteur (25) pendant au moins une demi-alternance de signe opposé.

## Description

L'invention se rattache au secteur de l'électroménager, et plus particulièrement aux appareils électroménagers électriques, généralement destinés à des fonctions de chauffage ou de cuisson. Elle concerne plus spécifiquement un perfectionnement apporté aux appareils électroménagers dans lesquels le déplacement d'une partie interne formant soit un chariot, soit un support, telle une grille, soit un couvercle, est assuré par un mécanisme motorisé. L'invention vise plus particulièrement des appareils dont la commande du moteur permet de s'affranchir de la présence de capteurs de position ou de capteurs de fin de course.

Dans la suite de la description, l'invention sera plus précisément décrite dans son application particulière à des grille-pain, mais elle peut trouver des applications pour d'autres appareils électroménagers électriques dans lesquels il est nécessaire d'assurer, par rapport à un châssis, le mouvement d'un organe mobile, qui pour l'application d'un grille-pain est le chariot porte pain. On désignera donc, dans la suite de la description, par le terme chariot, un tel organe mobile.

De façon connue, un grille-pain comporte un chariot porte pain, qui est apte à se déplacer à l'intérieur d'un châssis, pour permettre de venir positionner les tranches de pain à griller en regard d'éléments chauffants. Le déplacement du chariot peut être effectué sous l'effet d'un effort exercé par l'utilisateur, ou bien par un ressort ou un élément de rappel, ou bien encore par un mécanisme motorisé.

L'utilisation de mécanismes motorisés pour assurer le déplacement du chariot porte pain d'un grille-pain a déjà été décrite dans les documents US 2 773 441, GB 765 014, FR 1 556 718, EP 0 034 463, EP 0 048 769 et FR 2 729 286.

Les mécanismes motorisés assurant le déplacement du chariot porte pain comportent donc généralement un capteur de position, permettant de détecter que le chariot a atteint ses positions extrêmes.

Ces capteurs de position peuvent par exemple être des contacts électriques qui délivrent l'information de nature électrique lorsque le chariot atteint une position extrême. Toutefois, l'ajout d'un tel capteur dans un grille-pain en augmente inévitablement le coût de revient, et ce d'autant plus qu'il est généralement nécessaire de prévoir deux capteurs, correspondant aux positions extrêmes haute et basse du chariot.

Un problème que se propose de résoudre l'invention est celui de permettre la commande correcte du déplacement du chariot en l'absence de capteur de position ou de capteur de fin de course du chariot.

L'invention concerne donc un appareil électroménager électrique tel qu'un grille-pain, un barbecue, ou une friteuse notamment.

De façon connue, un tel appareil comporte un châssis et un chariot mobile. Le chariot mobile est apte à se déplacer selon un mouvement alternatif par rapport au châssis grâce à un mécanisme incluant un moteur électrique. Ce moteur électrique est alimenté par une source de tension alternative.

Conformément à l'invention, cet appareil se caractérise en ce qu'il comporte :
- des moyens pour connecter électriquement le moteur à la source de tension pendant tout ou partie des demi-alternances d'un signe donné de la tension alternative ;
- des moyens de commande desdits moyens de connexion, prenant en compte une estimation de la vitesse du moteur élaborée à partir de la tension mesurée aux bornes du moteur pendant au moins une demi-alternance de signe opposé.

Autrement dit, l'invention consiste à commander le moteur électrique en ne l'alimentant que pendant les demi-alternances de la tension du réseau qui génèrent un mouvement dans le sens de rotation souhaité. Pendant les autres demi-alternances, le moteur n'est pas alimenté, et la tension qui règne à ses bornes correspond donc uniquement à la force contre-électromotrice, puisqu'aucun courant ne le traverse et que la chute de tension dans la résistance du bobinage est donc nulle. Cette force contre-électromotrice étant directement liée à la vitesse de rotation, il est ainsi possible d'en déduire la vitesse du moteur, grâce à cette mesure pendant les demi-alternances considérées.

Ainsi, la surveillance de cette tension permet aux moyens de commande de détecter un arrêt du mouvement du chariot, lorsque la mesure de la tension aux bornes du moteur est nulle, pendant une ou plusieurs alternances de signe opposé à celui des demi-alternances pendant lesquelles le moteur est alimenté.

Bien entendu, on considère que la mesure de la tension est nulle lorsqu'elle est inférieure à un seuil prédéterminé qui peut tenir compte de certaines tolérances de mesure et d'autres phénomènes, en particulier des phénomènes mécaniques, tels que des rebonds, ou bien des phénomènes électriques (démagnétisation), ou encore un effet de la température.

Ainsi, pour s'assurer du réel arrêt du chariot, il peut être préférable de détecter une mesure de tension nulle sur plusieurs demi-alternances de même signe successives.

L'estimation de la vitesse de déplacement du chariot peut être utilisée pour déterminer, après intégration de cette estimation par les moyens de commande, la distance parcourue par le chariot.

Il est donc possible par la suite de comparer, par les moyens de commande, d'une part la distance déterminée lorsque la vitesse estimée du chariot est nulle, et d'autre part la distance correspondant aux positions extrêmes du chariot. De cette manière, et en fonction de seuils de tolérance prédéterminés, il est possible de détecter que le chariot est parvenu dans sa position basse ou haute maximum, pour interrompre l'alimentation du moteur.

Cette détection se fait sans aucun capteur de position ou de butée, ce qui rend le dispositif particulièrement fiable et compétitif en terme de coûts. Bien entendu, la détermination de la position après intégration de l'estimation de la vitesse permet d'évaluer en temps réel la position du chariot par rapport au châssis. Ainsi, lorsque la distance déterminée quand la vitesse estimée du chariot est nulle ne correspond pas à la distance correspondant aux positions extrêmes du chariot, des mouvements de va-et-vient du chariot autour de la position d'arrêt sont générés.

En d'autres termes, si le chariot apparaît immobile dans une position qui ne correspond pas à une fin de course, cela peut signifier que le chariot a été bloqué, par exemple par la mise en travers d'une tranche de pain, ou tout autre obstacle.

Dans ce cas, le système peut être commandé de telle manière à exercer un effort supplémentaire sur le chariot suffisamment important pour vaincre cette résistance, de manière à débloquer le chariot.

Avantageusement, les mouvements successifs sont effectués à des vitesses de plus en plus grandes afin d'essayer de débloquer rapidement le chariot.

Toutefois, après un nombre d'essais infructueux prédéterminés, le système peut également se mettre hors service, et en assurer le signalement visuel ou sonore.

Par ailleurs, il est également possible de prévoir l'arrêt du chariot dans les positions intermédiaires, utiles pour certaines opérations de maintien du pain préalablement chauffé à une température suffisante, et ce avec une grande latitude de programmation.

Avantageusement en pratique, le moteur utilisé peut être un moteur a courant continu, et plus particulièrement un moteur connecté à la source de tension alternative en série avec un composant résistif. Dans ce cas, il est possible d'utiliser un moteur dimensionné pour des faibles tensions, typiquement de l'ordre de la dizaine de volts, en l'alimentant avec une tension réseau alternative de l'ordre de plusieurs centaines de volts, en adaptant la valeur ohmique de la résistance disposée en série. Une autre solution consiste à alimenter le moteur à partir d'une alimention continue, par l'intermédiaire d'un pont en « H » et PWM.

Selon une autre caractéristique de l'invention, le schéma électrique d'alimentation du moteur peut comporter un composant résistif, disposé en parallèle du moteur, et qui est alimenté uniquement lorsque le moteur tourne dans un sens déterminé. Ainsi, il est donc possible de dériver une partie du courant traversant le moteur lorsque le chariot se déplace dans un sens prédéterminé.

On peut à titre d'exemple diminuer le courant traversant le moteur lorsque le chariot est entraîné dans le sens de la descente, de manière à compenser l'effort généré par le poids du pain transporté sur le chariot, afin que la vitesse de descente du chariot soit sensiblement identique à celle de sa remontée en présence de pain sur le chariot, du fait de la présence de cette résistance supplémentaire caractéristique.

Par ailleurs, durant la demi période pendant laquelle le moteur n'est pas piloté, cette résistance agit comme un frein électro-magnétique puisque le moteur agit alors en générateur et doit fournir de l'énergie pour alimenter cette résistance.

La présente invention vise également un procédé de commande d'un moteur d'appareil électroménager alimenté par une source de tension alternative, ledit moteur étant intégré dans un mécanisme assurant le déplacement d'un chariot mobile par rapport à un châssis, caractérisé en ce qu'il consiste :
- à connecter le moteur à la source de tension alternative, dans tout ou partie des demi-alternances d'un signe donné de la tension alternative,
- à estimer la valeur la vitesse du moteur à partir de la mesure de la tension aux bornes du moteur pendant au moins une alternance de signes opposés.

Avantageusement, le procédé détecte un arrêt du chariot lorsque la mesure de la tension aux bornes du moteur est nulle pendant la demi-alternance du signe opposé.

Une amélioration de ce procédé consiste à détecter l'arrêt du moteur après la mesure d'une tension nulle sur plusieurs demi-alternances de même signe successives.

La manière de réaliser l'invention, ainsi que les avantages qui en découlent, ressortiront bien de la description du mode de réalisation qui suit, à l'appui des figures annexées dans lesquelles :
- la figure 1 est une vue en perspective sommaire d'un chariot de grille-pain commandé conformément à l'invention, montré en faisant abstraction de l'essentiel du châssis,
- la figure 2 est une vue de côté du mécanisme d'entraînement du chariot,
- la figure 3 est un schéma électrique illustrant l'essentiel des composants du grille-pain de la figure 1,
- la figure 4 est un ensemble de chronographes montrant certaines formes d'ondes mesurées sur le schéma de la figure 3.

Comme déjà évoqué, l'invention concerne un perfectionnement apporté au procédé de commande d'un appareil électroménager équipé d'un organe mobile au moyen d'un mécanisme motorisé.

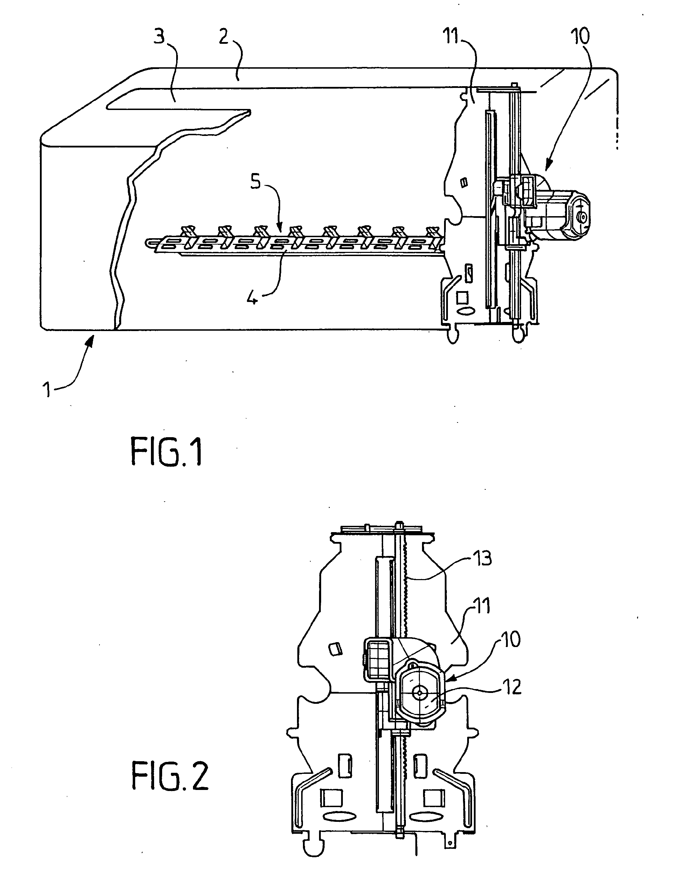

Dans l'exemple de réalisation décrit en détail ci-après, cet appareil est un grille-pain (1), qui comme illustré à la figure 1 comporte un châssis (2) équipé d'une fente (3) d'introduction des tranches de pain à griller. Ce châssis (2) renferme un chariot mobile (4), s'étendant sensiblement sur toute la longueur du grille-pain, et dont la face supérieure (5) est destinée à recevoir et à supporter les tranches de pain. Ce chariot (4) est mobile verticalement, entre les éléments chauffants (non représentés) équipant les faces principales intérieures du châssis (2).

Ce chariot mobile (4) peut se déplacer verticalement, entre deux positions extrêmes, grâce à un mécanisme motorisé (10), monté sur une plaque latérale (11), solidaire du châssis (2).

Dans l'exemple de réalisation illustré, ce mécanisme motorisé comporte un moteur (12) et un ensemble de roues et de tiges crantées (13), permettant de convertir le mouvement rotatif du moteur en un mouvement de translation rectiligne. Bien entendu, l'invention couvre d'autres variantes en ce qui concerne les aspects mécaniques de transmission du mouvement depuis le moteur (12) jusqu'au chariot (4).

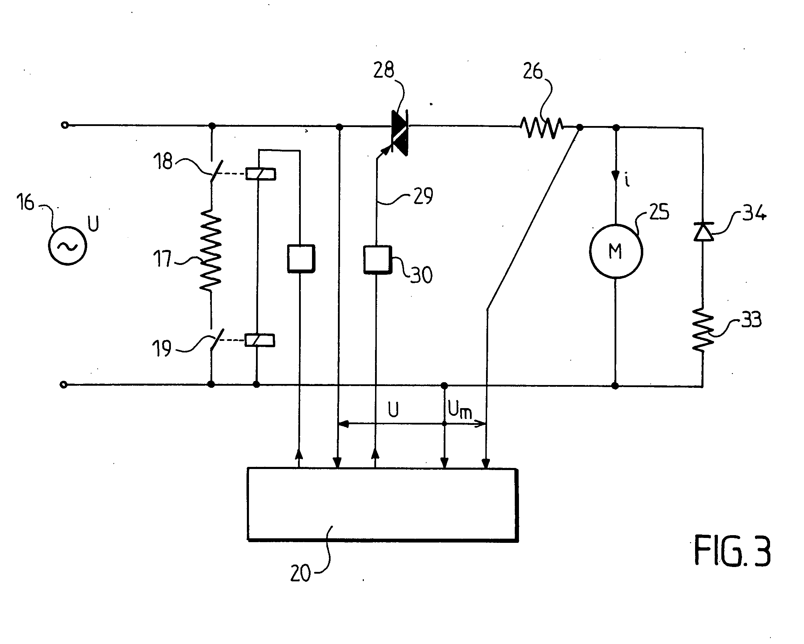

Le fonctionnement électrique de ce grille-pain, dans ses fonctions principales ressort du schéma de la figure 3. Ainsi, le grille-pain est destiné à être alimenté par une source de tension alternative (16), qui est très généralement la source de tension secteur. Une variante de réalisation utilise un pont en H associé à un dispositif de pulses à modulation d'amplitude (PWM).

La ou les résistances électriques (17) formant les éléments chauffants du grille-pain sont connectées à la tension alternative par l'intermédiaire de contacts (18, 19) de relais assurant l'isolation totale des éléments chauffants par rapport à la tension secteur (16) en dehors des phases de chauffage.

De manière schématique, ces relais électromécaniques sont commandés à partir d'informations issues d'un micro-contrôleur (20) assurant l'essentiel des fonctions de contrôle/commande relatives à l'invention.

Le mouvement du chariot (4) est provoqué par l'alimentation du moteur électrique (25), qui est typiquement un moteur électrique à courant continu, et avantageusement dimensionné électriquement pour supporter des tensions de l'ordre de quelques dizaines de volts. Pour ce faire, le moteur est alimenté en série avec une résistance (26) qui présente donc une valeur ohmique de l'ordre de la dizaine de fois de la valeur de la résistance du bobinage du moteur (25). L'alimentation est faite au travers d'un interrupteur statique, qui peut par exemple être un triac (28) ou tout autre composant dont l'état de conduction peut être commandé.

Ainsi, dans l'exemple illustré, ce triac (28) est commandé par un circuit de commande (30) générant des ordres (29) à partir d'informations élaborées par le microcontrôleur (20). Plus précisément, et conformément à l'invention, ce triac (28) est commandé pour assurer sa conduction uniquement pendant une partie des alternances soit positives soit négatives.

Le signe des alternances de la tension U est choisi pour assurer le sens de rotation voulu du moteur (25), et donc le sens de déplacement du chariot (4).

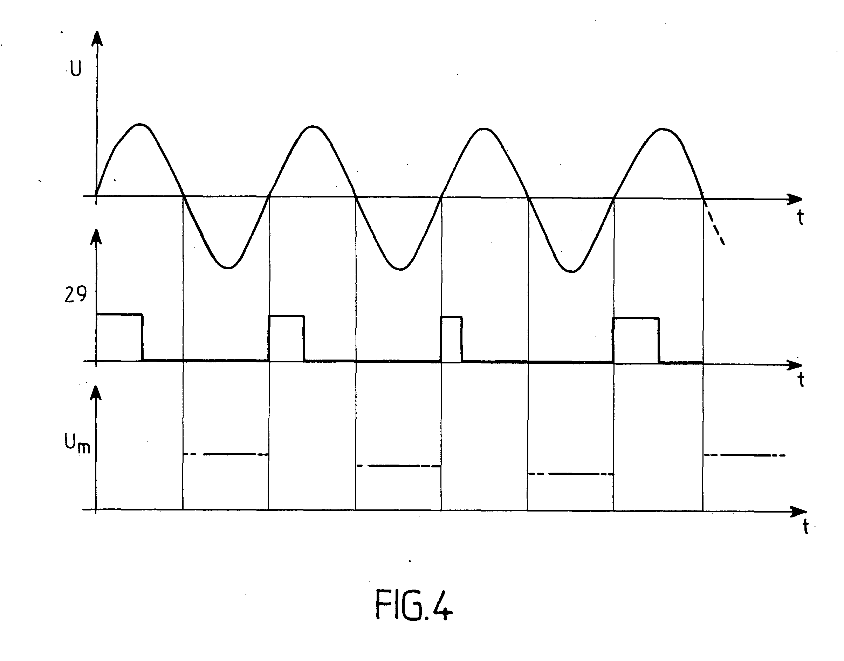

Ainsi, dans l'hypothèse illustrée, le passage d'un courant (i) positif dans le moteur (25) correspond à une rotation provoquant une montée du. chariot. Dans ce cas, le triac (28) est alimenté uniquement pendant une partie des alternances positives. Cette commande peut se faire de différentes manières, et par exemple comme illustré à la figure 4, en réglant une durée de conduction continue au sein de l'alternance, assimilable à un pilotage en angle de phase.

Toutefois, il est également possible d'assurer une commande pulsée, selon le principe général de la modulation de largeur d'amplitude (MLI / PWM).

On peut également envisager de commander en tout ou rien, c'est à dire par demie-alternance complète ou non selon la vitesse mesurée.

Conformément à l'invention, le triac (28) est bloqué pendant les alternances négatives, de sorte que la tension (Um) mesurée aux bornes du moteur correspond sensiblement à la force contre-électromotrice générée par le moteur (25).

Cette force contre-électromotrice est mesurée par le micro-contrôleur via des chaînes de mesure appropriées, notamment des ponts diviseurs de tension. Cette information de vitesse résultant de la mesure des tensions Um permet d'assurer la régulation du moteur par une variation de l'angle de phase et plus généralement par le contrôle du temps de conduction de l'interrupteur statique (28).

En effet, comme il est bien visible figure 4, la tension Um mesurée lors des demi-alternances négatives traduit l'alimentation du moteur dans la demi-alternance positive précédente. En fixant une consigne de tension correspondant à la consigne de vitesse souhaitée pour le déplacement du chariot, il est alors aisé, par comparaison, d'augmenter ou de réduire la durée de conduction continue au sein de la prochaine alternance positive pour ajuster la vitesse du moteur à celle souhaitée.

Cette mesure de la vitesse permet également de déterminer, après intégration, la position estimée du chariot (4). Il est ainsi possible de déterminer si le chariot est arrivé en position extrême de sa course, de manière à stopper l'alimentation du moteur, et générer des actions au niveau d'autres organes du grille-pain. Ainsi, lorsque le chariot (4) est considéré comme étant arrivé en position basse, il est possible d'autoriser l'alimentation des éléments chauffants (17).

En pratique, les distances correspondant aux positions extrêmes du chariot peuvent être soit préprogrammées dans le microcontrôleur, soit faire l'objet d'initialisation, par exemple à chaque mise sous tension du grille-pain. Plus précisément, il est possible de prévoir à la mise sous tension de l'appareil, une séquence dans laquelle le chariot est déplacé dans un sens pour atteindre une première position extrême (dont on considère qu'elle ne résulte pas d'un blocage puisque le grille-pain est vide), puis un déplacement du chariot dans le sens opposé pour atteindre la seconde position extrême. Ces distances maximales sont alors mémorisées en vue des comparaisons ultérieures.

Grâce à cette détermination des positions extrêmes, on peut détecter des blocages du chariot dans des positions intermédiaires. Le microcontrôleur (20) peut alors programmer des mouvements alternatifs à proximité de la zone de coincement, pour provoquer le déblocage du chariot. Il est également possible de commander le moteur avec une consigne de vitesse supérieure, de manière à essayer de provoquer le décoincement.

Grâce à la possibilité de déterminer la position du chariot à l'intérieur du châssis, d'autres modes de fonctionnement peuvent être mis en oeuvre. Ainsi, après une phase de chauffage, on peut générer le déplacement du chariot dans une position intermédiaire, dans laquelle les tranches de pain sont maintenues partiellement à l'intérieur du volume de chauffe, pour ne pas se refroidir trop rapidement.

Comme illustré à la figure 3, il est possible de disposer, en parallèle du moteur (25) une résistance électrique (33), par l'intermédiaire d'une diode (34). Cette diode (34) est connectée de telle sorte qu'un courant peut ne traverser la résistance (33) que lorsque la tension (U) est négative, ce qui correspond comme évoqué ci-avant au sens de la descente du chariot (4).

Dans ce cas, lorsque le triac (28) est conducteur, la résistance (33) se trouve en parallèle avec la résistance du bobinage du moteur (25), de sorte que le courant (i) qui traverse le moteur est moindre que celui observé lorsque la diode (34) est bloquée, permettant d'ajuster la vitesse de descente afin qu'elle soit similaire à celle de montée en présence de pain, et ce, avec des ordres de commande (29) du triac identiques.

Cette résistance supplémentaire (33) permet donc de compenser. l'accélération générée par le poids du pain chargé sur le chariot, et qui s'ajoute à l'effort exercé par le moteur.

En pratique, la valeur ohmique de cette résistance (33) est de l'ordre de grandeur de celle de la résistance du bobinage du moteur (25). Elle peut bien entendu être adaptée en fonction de la configuration du grille-pain, et notamment du poids des pièces en mouvement.

Bien entendu, les différentes consignes de vitesse peuvent être influencées par des réglages effectués par l'utilisateur, en ce qui concerne le type de pain utilisé, ou bien encore tout mode de cuisson souhaité, qui necessiterait pour diverses raisons le déplacement du pain par rapport aux éléments chauffants. Cette influence peut également résulter d'une programmation du microcontrôleur.

Il ressort de ce qui précède que le procédé de commande et les appareils équipés conformément à l'invention permettent de s'affranchir de la présence d'un capteur de position ou de fin de course, ce qui diminue le prix de revient de tels appareils, et en augmente la fiabilité.

Cette commande spécifique permet d'accéder à une information de position du chariot, malgré l'absence de capteurs, ce qui permet d'assurer des fonctionnalités particulières, par exemple de tentatives de déblocage du chariot.

Bien que décrites ci-avant en détail dans l'application à un grille-pain, l'invention peut être appliquée à d'autres types d'appareils électroménagers. On peut citer à titre d'exemple des friteuses électriques dans lesquelles le chariot précédemment cité porte alors un panier destiné à recevoir les produits à frire, et étant apte à se déplacer verticalement afin d'introduire et de sortir les produits du bain de friture. Dans ce cas, le mouvement du panier peut être réalisé conformément à l'invention, c'est-à-dire sans capteur de position ni de butée.

Avantageusement, lorsque la distance parcourue par le chariot correspond à une valeur prédéterminée, le chariot est arrêté puis animé de mouvements de va-et-vient rapides autour de cette position, permettant, par ces petits mouvements alternatifs, de provoquer un égouttage des aliments frits. La valeur prédéterminée correspond alors à une position où le panier est totalement sorti du bain de friture.

L'invention peut par exemple également être appliquée à différents autres types d'appareils et de cuisson dans lesquels les aliments à chauffer se situent sur une grille qui peut être déplacée à l'intérieur d'un volume de cuisson. On peut notamment citer :
- l'enfournage automatique d'un plat,
- le positionnement automatique en hauteur d'une grille dans un four, et son ajustement en cours de cuisson, voire une orientation particulière pouvant aller jusqu'au retournement (grillage du pain par exemple)
- la fonction de tournebroche dans un four : soit de manière classique, soit par mouvements alternatifs pour une fonction grill, avec possibilité de variation de vitesse en cours de cuisson.
- la fonction de ventilation de four avec asservissement de la vitesse en fonction de la consigne de température (ou inversement), ce qui permet de réduire les coûts et de diminuer sensiblement le niveau sonore de la fonction de ventilation,
- le relèvement / abaissement d'une grille de support d'aliments d'un barbecue, et ceci par rapport à la résistance chauffante sous-jacente,
- l'ouverture / fermeture automatique d'une porte de four ou d'un couvercle d'appareil....

## Revendications

1. Appareil électroménager électrique (1), tel que grille-pain, barbecue ou friteuse notamment, comportant un châssis (2) et un chariot mobile (4), ledit chariot (4) étant apte à se déplacer selon un mouvement alternatif par rapport au châssis (2) grâce à un mécanisme incluant un moteur électrique (25) alimenté par une source de tension alternative (16), **caractérisé en ce qu'**il comporte :
- des moyens (28) pour connecter électriquement le moteur (25) à la source de tension (16) pendant tout ou partie des demi-alternances d'un signe donné de la tension alternative,
- des moyens de commande (20) desdits moyens de connexion, prenant en compte une estimation de la vitesse du moteur élaborée à partir de la tension (Um) mesurée aux bornes du moteur (25) pendant au moins une demi-alternance de signe opposé.

2. Appareil électroménager électrique selon la revendication 1, **caractérisé en ce que** les moyens de commande (20) détectent un arrêt du mouvement du chariot par la mesure d'une tension (Um) nulle aux bornes du moteur (25) pendant au moins une alternance de signe opposé.

3. Appareil électroménager électrique selon la revendication 2, **caractérisé en ce que** l'arrêt du chariot (4) est détecté après la mesure d'une tension (Um) nulle sur plusieurs demi-alternances de même signe successives.

4. Appareil électroménager électrique selon la revendication 1, **caractérisé en ce que** les moyens de commande (20) assurent une intégration de l'estimation de vitesse, de manière à déterminer la distance parcourue par le chariot.

5. Appareil électroménager électrique selon l'une des revendications 2 et 4, **caractérisé en ce que** les moyens de commande (20) assurent la comparaison entre la distance déterminée lorsque la vitesse estimée du chariot est nulle, et la distance correspondant aux positions extrêmes du chariot.

6. Appareil électroménager électrique selon la revendication précédente, **caractérisé en ce que**, lorsque la distance déterminée quand la vitesse estimée du chariot est nulle ne correspond pas à la distance correspondant aux positions extrêmes du chariot, des mouvements de va-et-vient du chariot autour de la position d'arrêt sont générés.

7. Appareil électroménager électrique selon la revendication précédente, **caractérisé en ce que** les mouvements successifs sont effectués à des vitesses de plus en plus grandes.

8. Appareil électroménager électrique selon la revendication 4, **caractérisé en ce que** l'appareil est une friteuse, le chariot portant alors un panier destiné à recevoir les produits à frire, et étant apte à se déplacer verticalement afin d'introduire et de sortir les produits du bain de friture, et **en ce que**, lorsque la distance parcourue par le chariot correspond à une valeur prédéterminée, le chariot est arrêté puis animé de mouvements de va-et-vient rapides autour de cette position.

9. Appareil électroménager électrique selon la revendication 1, **caractérisé en ce qu'**il comporte un composant résistif (33) disposé en parallèle du moteur, et alimenté uniquement lorsque le moteur (25) tourne dans un sens donné.

10. Appareil électroménager électrique selon la revendication 1, **caractérisé en ce que** le moteur (25) est un moteur à courant continu.

11. Appareil électroménager électrique selon la revendication 1, **caractérisé en ce que** le moteur est connecté à la source de tension alternative en série avec un composant résistif (26).

12. Procédé de commande d'un moteur d'appareil électroménager alimenté par une source de tension alternative (16), ledit moteur (25) étant intégré dans un mécansime assurant le déplacement d'un chariot mobile (4) par rapport à un châssis (2), **caractérisé en ce qu'**il consiste :
- à connecter le moteur (25) à la source de tension alternative (16), dans tout ou partie des demi-alternances d'un signe donné de la tension (Um) alternative,
- à estimer la valeur de la vitesse du moteur à partir de la mesure de la tension aux bornes du moteur pendant au moins une alternance de signes opposés.

13. Procédé selon la revendication 12, **caractérisé en ce qu'**on détecte un arrêt du chariot lorsque la mesure de la tension (Um) aux bornes du moteur (25) est nulle pendant la demi-alternance du signe opposé.

14. Procédé selon la revendication 13, **caractérisé en ce que** l'arrêt du moteur est détecté après la mesure d'une tension nulle sur plusieurs demi-alternances de même signe successives.
